Europäisches Patentamt

European Patent Office

Office européen des brevets

(11) Veröffentlichungsnummer : **0 108 415 B1**

(12) **EUROPÄISCHE PATENTSCHRIFT**

(45) Veröffentlichungstag der Patentschrift :
**25.01.95 Patentblatt 95/04**

(51) Int. Cl.⁶ : **G06F 9/22,** G06F 13/12, G06F 13/28

(21) Anmeldenummer : **83111100.0**

(22) Anmeldetag : **07.11.83**

(54) **Integrierte mikroprogrammierte Vorrichtung zur Steuerung von Informationsverarbeitungsabläufen und Verfahren zu ihrem Betrieb.**

(30) Priorität : **09.11.82 DE 3241378**

(43) Veröffentlichungstag der Anmeldung :
**16.05.84 Patentblatt 84/20**

(45) Bekanntmachung des Hinweises auf die Patenterteilung :
**25.01.95 Patentblatt 95/04**

(84) Benannte Vertragsstaaten :
**AT DE FR GB IT**

(56) Entgegenhaltungen :
**IBM TECHNICAL DISCLOSURE BULLETIN, Band 20, Nr. 4, September 1977, Seiten 1524,1525, New York, US; M.K. BENEDICT et al.: "Design technique for array logicpersonalization"**
**WESCON TECHNICAL PAPERS, Band 26, September 1982, Kapitel 2014, Seiten 1-6,Western Periodicals Co., North Hollywood, US; T.W. CANTRELL: "The HD68450 - Aversatile DMA controller for high performance system design"**

(56) Entgegenhaltungen :
**ELECTRONIC DESIGN, Band 27, Nr. 7, 29. März 1979, Seiten 102-106, HaydenPublishing Co., Rochelle Park, US; D. STAMM et al.: "Free the muC's CPU from I/O hassles with a special I/O processor"**
**ELECTRONICS LETTERS, Band 17, Nr. 19, 17. September 1981, Seiten 709,710,London, GB; C.A. PAPACHRISTOU: "Method for direct multiway branching inmicroprogram control"**

(73) Patentinhaber : **SIEMENS AKTIENGESELLSCHAFT Wittelsbacherplatz 2 D-80333 München (DE)**

(72) Erfinder : **Schönberger, Franz, Dipl.-Ing. Grasmückenweg 23 D-8000 München 45 (DE)**
Erfinder : **Stadlmeier, Hans, Dipl.-Ing. Aichacher Strasse 2 D-8000 München 70 (DE)**
Erfinder : **Brunner, Reinhold, Dipl.-Ing. Kafkastrasse 7a/6 D-8000 München 83 (DE)**
Erfinder : **Wagner, Wolfgang, Dipl.-Ing. Wachenheimerstrasse 15 D-8000 München 80 (DE)**

## Beschreibung

Die Erfindung betrifft eine integrierte mikroprogrammierte Vorrichtung zur Steuerung von Informationsverarbeitungsabläufen nach dem Oberbegriff des Anspruchs 1 und ein Verfahren zu ihrem Betrieb.

Eine integrierte mikroprogrammierte Vorrichtung der eingangs genannten Art soll einen Anschluß an das BUS-Konzept der INTEL-Bausteinfamilie iAPX 186 und iAPX 286 ermöglichen. Eine solche Vorrichtung soll also mit zwei verschiedenen BUS-Interfaces ausgestattet sein. Eine solche Vorrichtung soll dadurch die Fähigkeit haben, wahlweise mit den BUS-timings der INTEL-Zentraleinheiten iAPX 186 oder iAPX 286 zu arbeiten. Der iAPX 186-Modus, kurz "M186" genannt, ist auch BUS-Zyklus-kompapatibel mit den INTEL-Zentraleinheiten 8086 und 8088. Wegen der unterschiedlichen BUS-Schnittstellen der beiden Modi (Demultiplex-BUS bei M286, Multiplex-BUS bei M186) ergeben sich verschiedene minimale Ausführungszeiten für die Abarbeitung eines BUS-Zyklus. So werden beispielsweise im M186 vier Prozessorzyklen, kurz "T-States" genannt, benötigt, während im M286 ein BUS-Zyklus mit zwei T-States abgearbeitet werden kann. Wenn eine integrierte mikroprogrammierte Vorrichtung der eingangs genannten Art mit einer Zentraleinheit (CPU) am BUS zusammenarbeitet, müssen zwei Arten von BUS-Zyklen unterschieden werden, nämlich der sogenannte "Aktive BUS-Zyklus", wenn die integrierte mikroprogrammierte Vorrichtung selbst den BUS für die Handhabung von Informationen beansprucht und der "passive BUS-Zyklus", wenn die die integrierte mikroprogrammierte Vorrichtung bedienende Zentraleinheit (CPU) den BUS für sich beansprucht und auf die integrierte mikroprogrammierte Vorrichtung zugreift. Während eines "passiven BUS-Zyklus" benimmt sich die integrierte mikroprogrammierte Vorrichtung also wie ein Speicher, d.h. die Zentraleinheit (CPU) kann beispielsweise auf ein internes Steuer-, Adress- oder Datenregister der integrierten mikroprogrammierten Vorrichtung schreibend oder lesend zugreifen. Während dieses "passiven BUS-Zyklus" befindet sich die integrierte mikroprogrammierte Vorrichtung in einem sogenannten "Idle-STATE" (TI). Für die Abarbeitung eines "aktiven BUS-Zyklus" werden eine Reihe von T-States benötigt, die spezifische Aktionen auf der "externen BUS-Schnittstelle" in Abhängigkeit der des Bausteinmodus bewirken.

Im M286 sind folgende T-States definiert mit den in der Beschreibung aufgelisteten wichtigsten Aktionen: T0,T1 und TL. Im M186 sind folgende T-States definiert mit den in der Beschreibung aufgelisteten wichtigsten Aktionen: T0,T1,T2,T3 und TL. Gemeinsam für M186 und M286 ist auch noch ein sogenannter "Idle-STATE" (TI) definiert, der immer dann vorliegt, wenn keine der oben erwähnten externen Aktivitäten T0,T1,T2 oder T3 stattfinden sollen.

Aus IBM Technical Disclosure Bulletin, Band 20, Nr.4, September 1977, Seiten 1524 bis 1525, aus Electronic Design, Band 27, Nr. 7, 29.03.1979, Seiten 102 bis 106 und aus Electronic Letters, Band 17, Nr. 19, 17.09.1981, Seiten 709 bis 710 ist bekannt, daß bei einer Vorrichtung zur Steuerung von Informationsverarbeitungsabläufen ein Zustand wie z.B. ein T-State von vorhergehenden Zuständen und/oder von irgendwelchen Bedingungen oder Parametern abhängt. Außerdem ist diesen Schriften zu entnehmen, welche Bedeutung T-States in Vorrichtungen zur Steuerung von Informationsverarbeitungsabläufen haben.

Der vorliegenden Erfindung liegt die Aufgabe zugrunde, bei einer integrierten mikroprogrammierten Vorrichtung der eingangs genannten Art und bei einem Verfahren zu ihrem Betrieb die Anforderungen an die Ablaufsteuerung zu minimieren.

Diese Aufgabe wird erfindungsgemäß durch eine integrierte mikroprogrammierte Vorrichtung nach dem Anspruch 1 sowie ein Verfahren nach dem Anspruch 11 gelöst.

Ausgestaltungen und Vorteile der Erfindung sind in den Unteransprüchen, der Beschreibung und der Zeichnung dargestellt.

Mit einer erfindungsgemäßen Vorrichtung können die obengenannten T-States sinnvoll aneinandergekettet und geeignet Uberlappt werden, so daß die obengenannten BUS-Zykluszeiten von zwei T-States im M286-Modus und von vier T-States im M186-Modus erreicht werden können. Bei einer erfindungsgemäßen integrierten mikroprogrammierten Vorrichtung kann die Maschinensteuerung so vereinheitlicht werden, daß es möglich ist, unabhängig von beispielsweise den Betriebsmodi M186 und M286 die spezifischen Hardware-Komplexe der erfindungsgemäßen Vorrichtung so zu steuern, daß sie beispielsweise mit dem jeweiligen INTEL-BUS-timing kompatibel sind.

Die Erfindung wird im folgenden anhand eines ADMA (advanced direct memory access controller) als Ausführungsbeispiel näher erläutert. Dieses Ausführungsbeispiel der Erfindung wird im folgenden anhand der Zeichnung näher beschrieben.

Fig.1 erläutert die Wirkungsweise eines erfindungsgemäßen ADMA.

Fig.2 zeigt ein Blockdiagramm für einen erfindungsgemäßen T-State Generator.

Fig.3 zeigt ein M286 ADMA timing Diagramm.

Fig.4 zeigt ein M186 ADMA Timing Diagramm.

Fig.5 zeigt ein T-State Diagramm für BUS-Zyklen im M186-Modus und im M286-Modus.

Fig.6     zeigt ein M286-Modus ADMA State Diagramm.

Fig.7     zeigt ein M186-Modus ADMA State Diagramm.

Fig.8     zeigt Übergangsbedingungen für die ADMA State Diagramme von Fig.6 und von Fig.7.

Erfindungsgemäß wurden einige ADMA-spezifische neue T-States definiert, die mit den oben erwähnten T-States T0, T1, T2, T3, TL, TI nach bestimmten Kriterien überlagert werden können. Die fortschreitenden T-States werden erzeugt vom "T-State Generator" TSG, der sich in Abhängigkeit von gerade aktuellen T-State-Zuständen und einigen Parametern (IREADT, BIUSPLIT, IRESET, PRIOVLD, REQVLD, ORGMXWAIT, ISTE, RDWR und M186) immer mit Beginn einer Phase PHI1 für einen neuen T-State oder für eine Kombination von mehreren T-States entscheidet.

Im M286 sind folgende T-States definiert mit den aufgelisteten wichtigsten Aktionen:

T0:     Start eines BUS-Zyklus:

Ausgabe des externen Status für Lesen bzw. Schreiben.

Ausgabe der externen Adresse für Lese- bzw. SchreibZugriff auf den Adress-BUS.

T1:     Erster T-State des M286-BUS-Zyklus:

Ausgabe der externen Adresse für Lese- bzw. Schreib-Zugriff wird auf dem Adress-BUS aufrechterhalten.

Ausgabe der externen Daten in einem Schreib-Zugriffsfall auf dem Daten-BUS.

TL:     Beendigung des M286-BUS-Zyklus:

Ausgabe der externen Daten auf dem Daten-BUS wird in einem Schreib-Zugriffsfall aufrechterhalten.

Auswertung eines "READY"-Signals, das vom passiven Partner-des ADMA gesendet werden muß; bei Nichtbereitschaft des passiven Partners wird eine Wiederholung des TL angefordert.

Annahme der externen Daten vom Daten-BUS in einem Lese-Zugriffsfall, wenn vom passiven Partner das "READY"-Signal aktiviert ist.

Im M186 sind folgende T-States definiert mit den aufgelisteten wichtigsten Aktionen:

T0:     Start eines BUS-Zyklus:

Ausgabe des externen Status für Lesen bzw. Schreiben.

T1:     Erster T-State des M186-BUS-Zyklus:

Ausgabe des niederwertigen 16 Bit-Teiles der externen Adresse für Lese- bzw. Schreibzugriff auf den gemultiplexten Adress-/Daten-BUS (A/D-BUS).

Ausgabe des höherwertigen 4-Bit-Teiles der externen Adresse für Lese- bzw. Schreibzugriff auf den gemultiplexten Adress/Status-pins (Kontaktstifte).

T2:     Zweiter T-State des M186-BUS-Zyklus: Ausgabe der externen Daten auf dem 16 Bit-A/D-BUS bei einem SchreibZugriffs fall. Ausgabe von Statusinformation auf den gemultiplexten Adress-/Status-Pins.

T3:     Dritter T-State des M186-BUS-Zyklus: Ausgabe der externen Daten auf dem 16 Bit-A/D-BUS bei einem SchreibZugriffsfall. Ausgabe von Statusinformation auf den gemultiplexten Adress-/Status-Pins. Noch bei T3: Zusätzlich Auswertung eines "READY"-Signals, das von einem passiven Partner des ADMA gesendet werden muß, und zwar zu Beginn von T3; bei Nichtbereitschaft dieses passiven Partners des ADMA wird eine Wiederholung des T3-States angefordert.

Annahme der externen Daten am Ende vom T3-State vom 16 Bit-A/D-BUS bei einem Lesezugriff, wenn ein "READY"-Signal vom passiven Partner zu Beginn von T3 vorlag.

TL:     Beendigung des M186-BUS-Zyklus:

Ausgabe von Statusinformation auf den gemultiplexten Adress-/Status-Pins.

Ausgabe der externen Daten auf dem 16 Bit-A/D-BUS bei einem Schreib-Zugriffsfall.

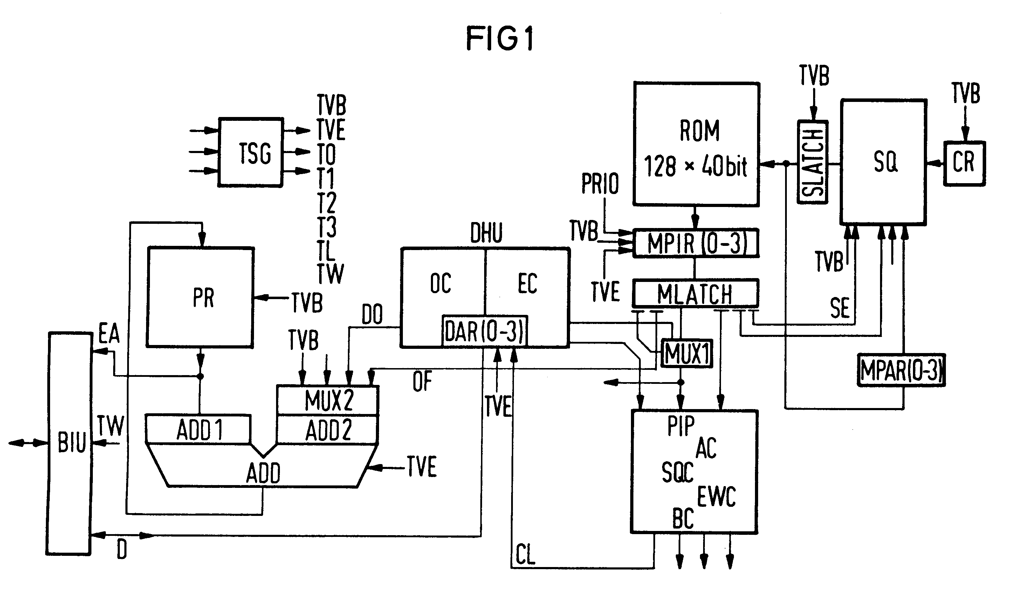

Fig.1 erläutert die Wirkungsweise eines erfindungsgemäßen ADMA. Anhand dieser Fig.1 werden zugleich auch die für einen erfindungsgemäßen ADMA spezifischen zusätzlichen T-States TVB (T-State Vorbereitung Beginn), TVE (T-State Vorbereitung Ende) und TW (T-State für Split-Fall) erläutert.

Der integrierte Hochleistungs-DMA-Kontroller ADMA besitzt vier voneinander unabhängige Kanäle, die den Datentransfer zwischen Medien (Speicher, Peripherie-Geräte) bewerkstelligen. Die Hauptsteuerung der Kanäle übernehmen dabei Mikroprogramme. Die Folge der Mikrobefehle wird von einem Sequenzer SQ gesteuert. Aufgabe des T-States TVB ist es, mit der Phase PHI1 das Mikroprogramm-Instruktionsregister MPIR des priorisierten Kanales i, i = 0,1,2,3, im ADMA zu selektieren und den Mikrobefehl in ein Mikroprogramm-Latch- MLATCH zu transferieren. Das Mikroprogramm-Latch MLATCH enthält auf Dauer eines Mikrobefehles das zur Abarbeitung eines BUS-Zyklus oder zur Abarbeitung einer internen organisatorischen Adreßrechnung notwendige aktuelle Mikrowort. Eine Vielzahl der Hardware-Einheiten des ADMA erhält seine Instruktionen direkt vom Mikroprogramm-Latch MLATCH.

Jeder T-State erstreckt sich mindestens über zwei Phasen PHI1 und PHI2. Aufgabe des T-States TVB ist es, mit der Phase PHI2 eine 24 Bit Pointer-Adresse aus dem internen ADMA-Pointerregistersatz PR zu lesen, in einem Addier-Latch ADD1 zu speichern und zu einem Adreß-Puffer bei der "BUS INTERFACE UNIT" BIU zu transferieren. Diese 24 Bit Pointer-Adresse dient u.a. später als externe Adresse für eine externe Lese- bzw. Schreiboperation.

Eine weitere wichtige Aufgabe von TVB ist es, die Folgeadresse der aktuellen Mikroadresse bezogen auf den gleichen Kanal bereitzustellen. Diese Aufgabe übernimmt der sogenannte "SEQUENZER" SQ, der sich in Abhängigkeit einer Vielzahl von Parametern für eine von fünf verschiedenen Mikroprogrammadreß-Fortsetzungsmöglichkeiten entscheidet. Siehe dazu die parallele Patentanmeldung "Vorrichtung und Verfahren zur Folgeadreßbildung eines mikroprogrammgesteuerten Sequenzers".

Die Parameter aus den Kommando- und Status-Registern CR, die für die Generierung der Mikroprogramm-Folgeadresse benötigt werden, stehen jeweils gegen Ende von TVB PHI1 zur Verfügung. Dies bedeutet, daß nach Durchlaufen der Hardware des Sequenzers SQ die Mikroprogramm-Folgeadresse zur Phase TVB PHI2 ins sogenannte Sequenzer-Latch SLATCH übernommen werden kann. Das Sequenzer-Latch SLATCH kann als internes ROM-Adreß-Latch bezeichnet werden.

Der T-State TVE ist normalerweise der Folge-T-State von TVB, wenn eine gültige Mikroinstruktion während TVB vorlag. Hauptaufgabe des TVE ist es, den nächsten Mikrobefehl, bezogen auf den gerade bearbeiteten Kanal, zur Verfügung zu stellen. Deshalb wird während der Phase TVE PHI1 der interne Mikrocode-Festwertspeicher ROM unter der in den Zwischenspeicher SLATCH während der Phase TVB PHI2 transferierten Adresse gelesen. Die zur Phase TVE PHI2 stabilen ROM-Ausgangsdaten werden bei Gültigkeit der momentan bearbeiteten Mikroinstruktion in das kanalspezifische Mikroprogramm-Instruktionsregister MPIR eingeschrieben. Gleichzeitig mit dem Eintrag der Mikroinstruktion ins Register MPIR wird auch die Mikroprogrammadresse im Zwischenspeicher SLATCH ins kanalspezifische Mikroprogramm-Adreßregister MPAR übernommen. Die weitere Aufgabe des TVE ist es, zur Phase PHI1 eine Adreßpointeraddition zu steuern. Der erste Operand für diese Addition ist die während der Phase TVB PHI2 im Addierzwischenspeicher ADD1 gespeicherte 24 Bit Pointeradresse. Der zweite Operand für diese Addition wurde in Abhängigkeit des Mikrobefehltyps aus dem Mikrowort im Zwischenspeicher MLATCH über die Leitung OF oder mittels einer autonomen Offsetlogik innerhalb einer Datahandling-Einheit DHU über die Leitung DO ebenso zur Phase TVB PHI2 im Addierzwischenspeicher ADD2 abgelegt. Welcher Operand im Addierzwischenspeicher ADD2 abgelegt wird, wird über einen Multiplexer MUX2 festgelegt.

Das Ergebnis der im Addierer ADD durchgeführten Addition wird bei Gültigkeit der momentan bearbeiteten Mikroinstruktion in den 24 Bit Pointerregistersatz PR unter einer im Mikrowort vorgegebenen Adresse zurückgeschrieben.

Bei Mikrobefehlen, die den externen Datentransfer betreffen, wird im Gegensatz zu internen Organisations-Mikrobefehlen zusätzlich während des T-States TVE für den Fall, daß der Status für den Beginn einer externen Lese- bzw. Schreiboperation auf dem externen BUS ausgegeben werden kann, ein kanalspezifischer Bytecounter BC dekrementiert, sowie das kanalspezifische Datenassemblyregister DAR der autonomen Datahandling-Einheit DHU mit einem Clock-Puls CL bzw. Lesesignal beaufschlagt.

Aus Gründen der optimalen Ausnutzung des im internen Speicher ROM gespeicherten Mikrocodes wurde eine Hardware-Einrichtung definiert, die es ermöglicht, unabhängig von der BUS-Breite, beispielsweise 8 Bit oder 16 Bit, des an den ADMA angeschlossenen Organisationsspeichers, in dem das Kanalprogramm des ADMA gespeichert ist, und unabhängig davon, ob die Commandpointeradresse gerade oder ungerade ist, mit nur einem einzigen Satz sogenannter "SETUP"-Mikrobefehle die gesamten organisatorischen Transfers zum Laden der ADMA-Register CR, PR vom Speicher, der günstigerweise einen Kommandoblock aufweist, zu erreichen.

Es gibt zwei Möglichkeiten, die zu einem Splitfall und damit zur Anwendung eines T-States TW führen:

Ein organisatorischer oder ein "direct memory acess"-Wortzugriff vom ADMA mit einer ungeraden Adresse ("BIU ODD ADDRESS SPLITTING").

Ein organisatorischer Wortzugriffswunsch zum Speicher mit einem BUS-Anschluß von nur 8 Bit ("BIU PHYSICAL SPLITTING").

In diesen beiden Fällen wird der Wortzugriffswunsch des Mikroprogrammes von einer autonomen Einheit, der BUS-Interface-Einheit BIU, in einen tatsächlichen Bytezugriffswunsch umgewandelt. Danach wird die externe Adresse um 1 inkrementiert und ein zweiter Bytezugriff wird wiederum selbständig, ohne Anforderung eines neuen Mikrobefehles, gesteuert. Die Markierung der T-States mit TW dient dazu, während dieser Split-Zustände die Statusauswertung einer Match- und Verify-Einheit zu sperren, sowie den T-State Generator TSG davon zu unterrichten, daß mit einer Mikroinstruktion zwei BUS-Zyklen ausgeführt werden müssen.

Die Datahandling-Einheit DHU weist eine Offset-Steuerung OC und eine Ausführungssteuerung EC auf. Diese Steuerungen OC, EC betreffen sowohl den Informationsaustausch mit externen Informationsquellen als auch mit externen Informationssenken. Das im Zwischenspeicher MLATCH gespeicherte Mikrowort liefert Steuersignale SE zur Steuerung des Sequenzers SQ und steuert Mittel PIP zum Pipelining von Daten, steuert den Bytecounter BC und liefert Informationen für die Adreßpointersteuerung AC und für die Sequenzer-Steuerung SQC und liefert Informationen für die Steuerung EWC des externen Schreibzugriffes.

Mit einer Anordnung nach Fig.1 kann jede Pointeradresse inkrementiert, dekrementiert oder auch konstantgehalten werden. Mit einer Anordnung nach Fig.1 können beliebige physikalische BUS-Breiten und logische BUS-Breiten jeweils miteinander kombiniert werden.

Über Signale, die in Fig.1 mit PRIO bezeichnet sind, kann jeweils ein Kanal priorisiert werden.

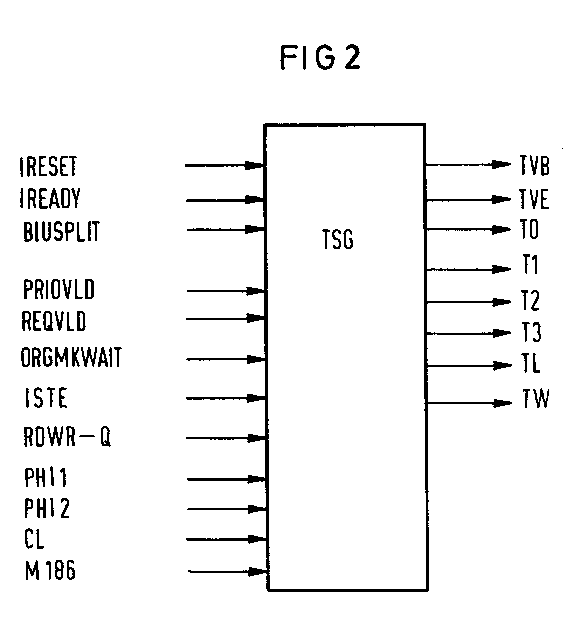

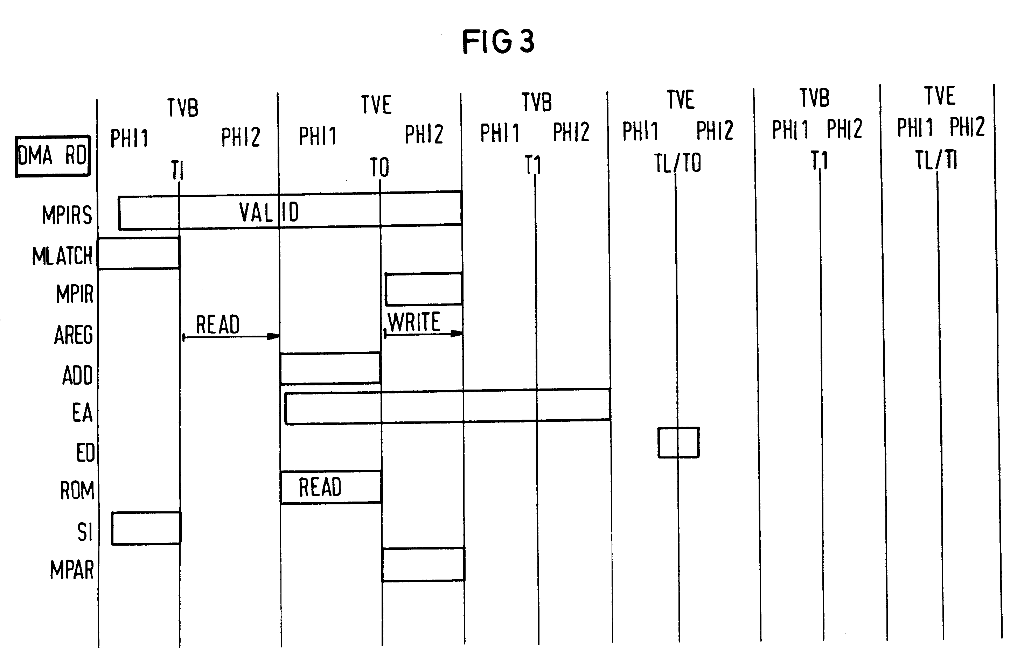

Uberlagert man nun die ADMA-spezifischen T-States mit den für das Intel-timing notwendigen T-States in geeigneter Weise, so entstehen die in den Fig.3 mit 8 erläuterten Übergangs- und State-Diagramme. Die Ubergangsbedingungen in den Mode-State-Diagrammen hängen von den anhand von Fig.2 erläuterten Parametern ab.

Fig.2 zeigt ein Blockschaltbild eines erfindungsgemäßen T-State Generators TSG mit folgenden Parametern:

T0, T1, T2, T3, TL, TI, TVB, TVE, TW (Anwesenheit des momentanen T-States oder einer Kombination von T-States).

| | |
|---|---|
| PRIOVLD: | Gültigkeit einer begonnenen Mikroinstruktion (wird während TVB abgefragt). |
| REQVLD: | Gültigkeit der laufenden Mikroinstruktion (wird während TVE abgefragt). |
| M186: | BUS-Interface-Modus des Bausteines (M186 ist aktiviert, wenn Baustein im M186-Modus arbeitet). |
| ORGMKWAIT: | Kennzeichnung eines Wartezustandes, der notwendig ist, wenn auf eine Leseoperation vom Organisationsspeicher, einer sogenannten "ORG RD"-Instruktion, direkt eine Schreiboperation auf den Organisationsspeicher ("ORG WR"-Instruktion) des ADMA folgt. Die Dauer eines Wartezustandes beträgt zwei T-States. |
| RDWR: | Markierung einer Mikroinstruktion, die auf dem externen BUS ein "Lesen" oder "Schreiben" auszuführen hat. Bei Mikroinstruktionen, die im ADMA interne organisatorische Adreßrechnungen durchführen, also keine externen Aktivitäten am BUS verlangen, ist RDWR inaktiv. |
| ISTE: | Internes Status Enable: Dieses Signal gibt an, ob der Status für den Beginn einer externen Lese- bzw. Schreiboperation auf dem externen BUS ausgegeben werden kann. Voraussetzung für die Aktivierung des ISTE ist u.a. ein Zugriffswunsch der momentan aktiven Mikroinstruktion auf den externen BUS, wenn die vorhergehende Mikroinstruktion bereits erfolgreich beendet werden konnte (Vorliegen eines aktivierten IREADY.Signals). |
| IREADY: | Internes READY: Signal gibt an, ob eine Mikroinstruktion mit externer BUS-Aktivität erfolgreich beendet werden konnte. Die Beendigung eines BUS-Zyklus wird vom Speicher bzw. Peripherie-Gerät mit einem "READY"-Signal quittiert. Bei Abwesenheit dieses READY-Signals vom passiven externen Partner wird in Abhängigkeit des BUS-Interface-Modus eine bestimmte T-State-Kombination wiederholt. |
| BIUSPLIT: | Signal für Erkennung eines Splitfalles: Dieses Signal steuert einen Taktgenerator und die BUS-Interface-Einheit BIU bei der Ausführung von zwei BUS-Zyklen pro Mikroinstruktion, wenn ein Wortzügriffswunsch beispielsweise in zwei Bytezugriffe aufgespaltet wird (für die Bedingungen siehe auch die Beschreibung zum T-State TW). |

Die beiden Signale PRIOVLD und REQVLD sind in Fig.1 als Signale PRIO zusammengefaßt dargestellt. Das Signal IRESET gibt an, daß ein interner Rücksetzvorgang (reset) vorliegt. Die beiden Phasen PHI1 und PHI2 werden von einem Taktgenerator gesteuert, der seinerseits von dem Clock-Signal CL angesteuert wird. Der Zusatz "-Q' hinter einer Signalbezeichnung bedeutet, daß das dadurch bezeichnete Signal in invertierter Form vorliegt. Alle T-States werden vom ADMA während der Phase PHI1 ausgewertet. Falls ein T-State zur Phase PHI2 noch benötigt wird, muß er Jeweils mit einem Transfer-Gate bei der Jeweiligen Einheit, bei der er benötigt wird, mit der Phase PHI1 in einem Latch zwischengespeichert werden.

Fig.3 zeigt ein M286 ADMA Timing Diagramm. Dabei sollen aus einer Datenquelle Daten ausgelesen werden. Während der Phase TVB PHI1 wird das Mikroprogramm-Instruktionsregister MPIR des priorisierten Kanals im ADMA selektiert und in ein Mikroprogramm-Latch MLATCH transferiert. Noch während TVB PHI1 wird im Sequenzer die kanalspezifische Folgemikroadresse durch Inkrementieren der vorhergehenden Mikroadresse über das Signal SI erzeugt. Solange der selektierte Mikrobefehl aus dem Register MPIR gültig ist, ist das Signal MPIRS aktiv.

Zu TVB PHI2 wird aus dem internen ADMA-Pointerregistersatz PR die externe Adresse über das aktivierte Signal AREG ausgelesen, wo die Daten ausgelesen werden sollen. Gleichzeitig wird diese externe Adresse im Addierzwischenspeicher ADD1 gespeichert und zu einem Adreß-Puffer bei der BUS-Interface-Einheit BIU transferiert.

Da während dem gerade beschriebenen T-State TVB weder ein T0 noch ein T1 vorgelegen hat, war gleichzeitig mit TVB der T-State TI gegeben.

Zur Phase TVE PHI1 wird im Addierer ADD eine neue externe Adresse erzeugt und während TVE PHI2 in das Adreßregister AREG zurückgeschrieben. Während der Phase TVE PHI1 wird der interne Mikrocode-Festwertspeicher ROM gelesen. Die zur Phase TVE PHI2 stabilen ROM-Ausgangsdaten werden bei Gültigkeit der momentan bearbeiteten Mikroinstruktion in das kanalspezifische Register MPIR eingeschrieben. Gleichzeitig mit diesem Eintrag in das Register MPIR wird auch die zugehörige Mikroprogramm-Adresse in das kanalspezifische Mikroprogramm-Adreßregister MPAR übernommen. Gleichzeitig mit TVE liegt T0 für den momentan gültigen Mikrobefehl vor: Während T0 und während dem darauffolgenden T1 ist die externe Adresse E8 aktiv. Während dem darauffolgenden TL werden die externen Daten ED vom ADMA übernommen.

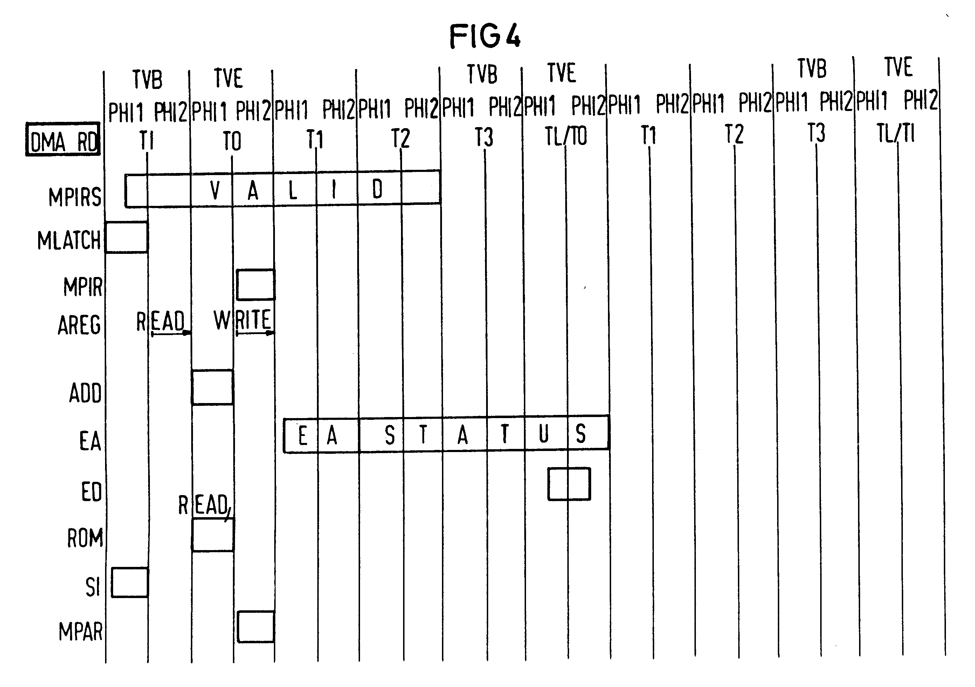

Fig.4 zeigt ein M186 ADMA Timing Diagramm. Das Timing Diagramm von Fig.4 beschreibt ebenfalls das Lesen von Daten aus einer externen Datenquelle. Unterschiede zwischen den Diagrammen von Fig.3 und von Fig.4 resultieren ausschließlich aus Unterschieden zwischen den Modi M186 und M286. Bei M186 gibt es zwei zusätzliche T-States, nämlich T2 und T3. Während T2 und T3 werden im wesentlichen Statusinformationen ausgegeben. Gegen Ende von T3 werden die externen Daten ED vom ADMA übernommen.

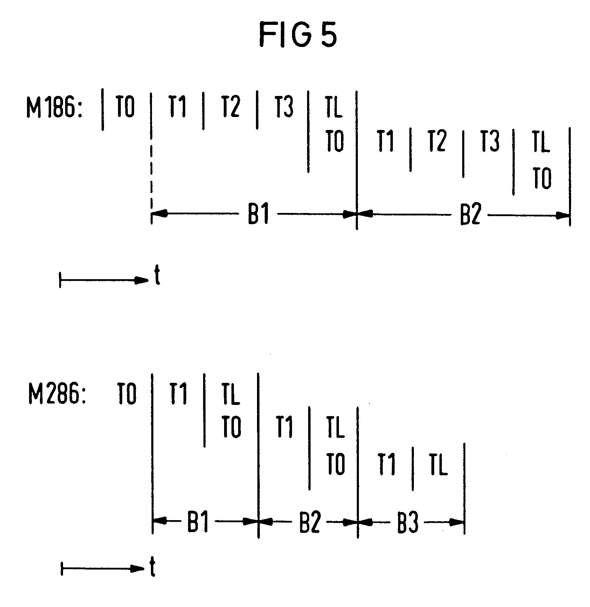

Fig.5 zeigt ein T-State-Diagramm für BUS-Zyklen im M186-Modus und M286-Modus. Dabei ist zu erkennen, daß bei beiden Modi der T-State TL eines BUS-Zyklus grundsätzlich mit dem T-State T0 des unmittelbar folgenden BUS-Zyklus überlappt. Dadurch ist es möglich, daß im M286-Modus BUS-Zykluszeiten von zwei T-States und im M186-Modus BUS-Zykluszeiten von vier T-States erreicht werden. Liegt während T0 eines BUS-Zyklus keine gültige Selektion MPIRS eines Mikrobefehl-Registers MPIR vor, so überlappt TL eines solchen BUS-Zyklus mit TI. Dieser Zustand TI hält dann solange an, bis eine gültige Selektion MPIRS eines Mikrobefehl-Registers MPIR vorliegt (siehe auch Fig.3 und Fig.4). In der Fig.5 ist die Überlappung eines ersten BUS-Zyklus B1 mit einem zweiten BUS-Zyklus B2 und einem dritten BUS-Zyklus B3 in Abhängigkeit von der Zeit t dargestellt.

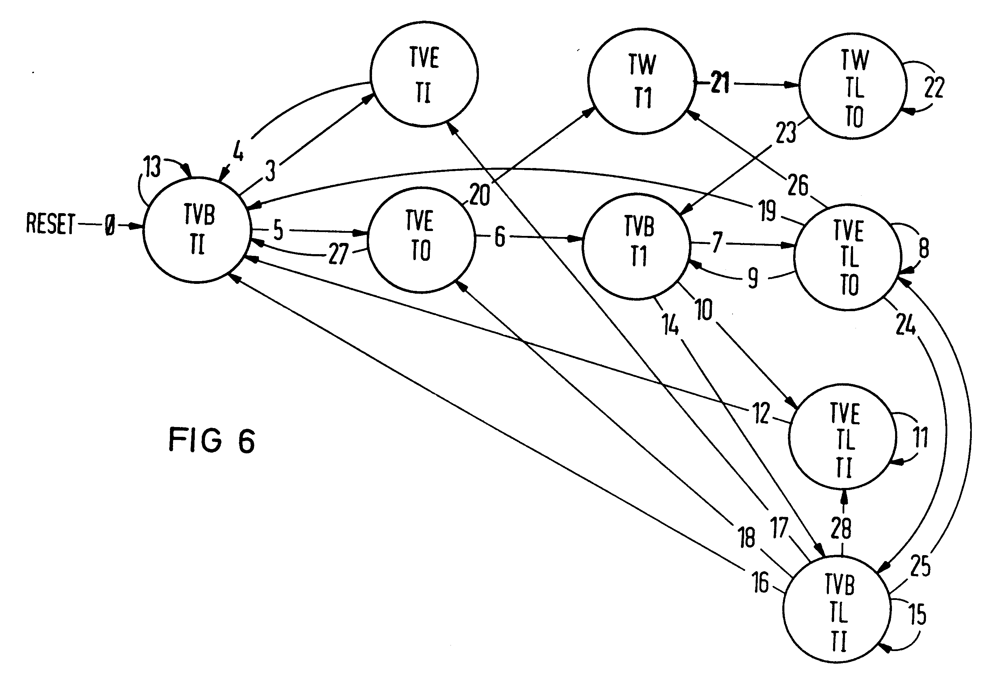

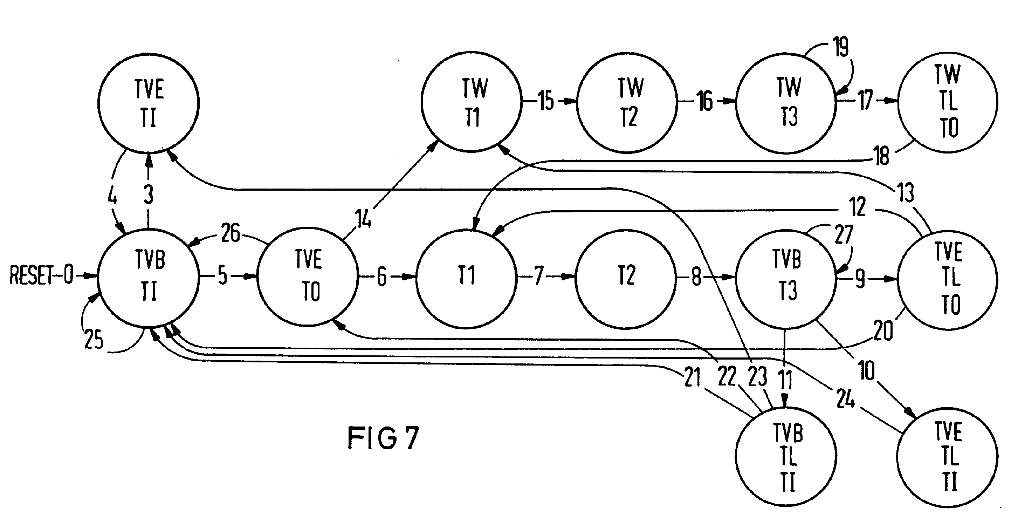

Fig.6 zeigt ein M286-Modus ADMA State Diagramm. Fig.7 zeigt ein M186-Modus ADMA State Diagramm. Diese Zustandsdiagramme weisen große Kreise auf, zwischen denen mit Nummern bezeichnete Übergänge möglich sind. Jeder große Kreis repräsentiert einen Zustand, der durch Überlappung der in dem betreffenden großen Kreis angegebenen T-States gekennzeichnet ist. Die in einem großen Kreis angegebenen T-States sind so zu verstehen, daß während des durch diesen großen Kreis repräsentierten Zustandes die in diesem großen Kreis eingetragenen T-States aktiv sind und die in diesem großen Kreis nicht dargestellten T-States inaktiv sind. Der Übergang von einem großen Kreis zu einem anderen großen Kreis erfolgt in Abhängigkeit davon, welche T-States im ersteren großen Kreis aktiv sind und welche Parameter am T-State Generator TSG vorliegen. Unterschiede zwischen den Diagrammen von Fig.6 und von Fig.7 ergeben sich wiederum nur durch Unterschiede zwischen dem M186-Modus und dem M286-Modus.

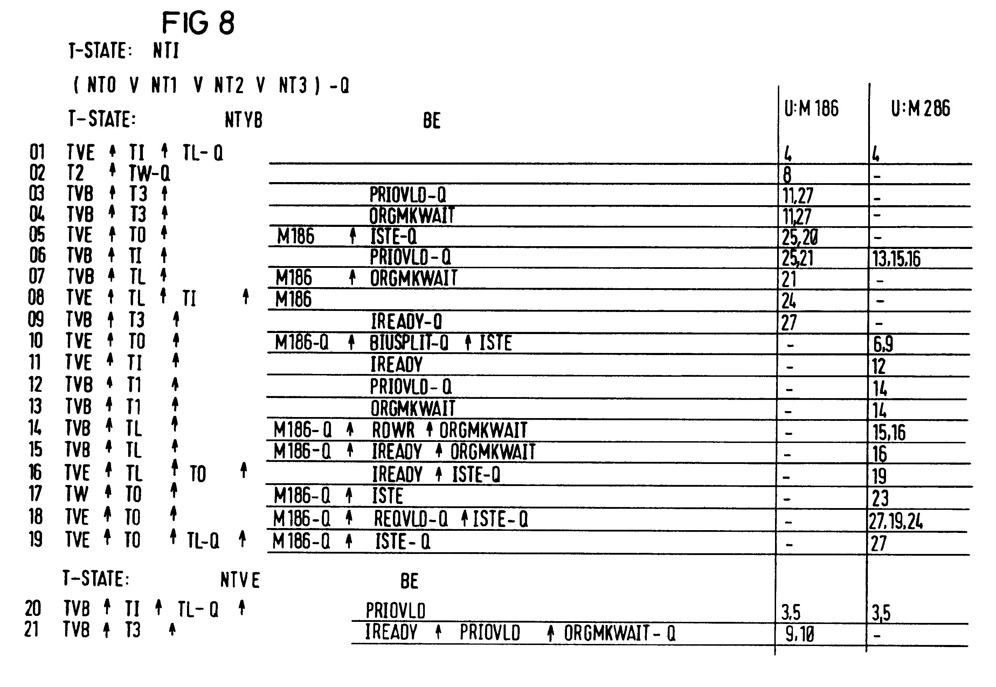

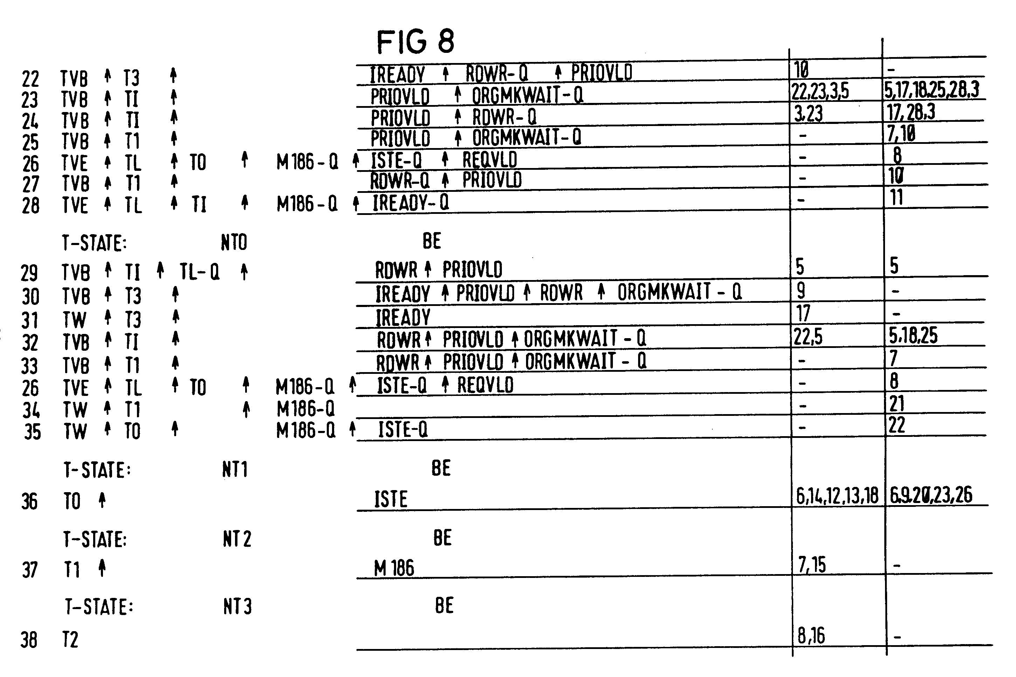

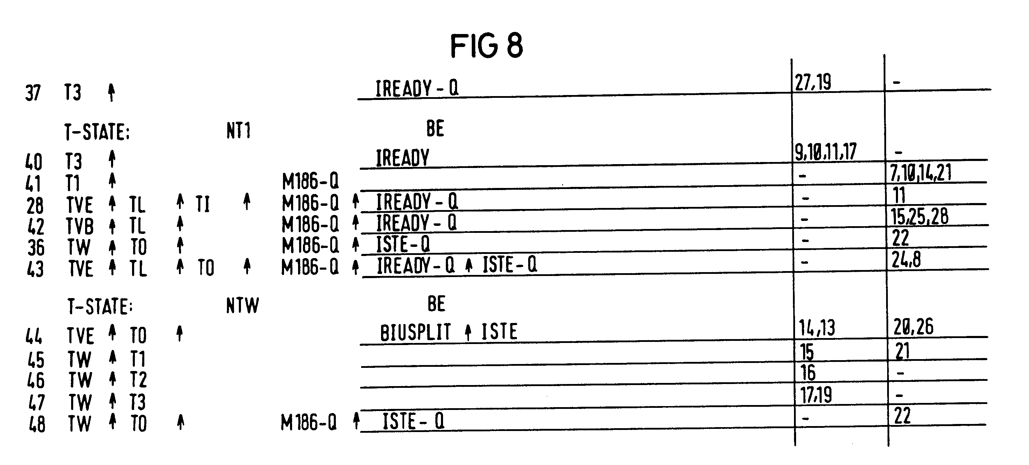

Fig.8 zeigt Übergangsbedingungen für die ADMA-State Diagramme von Fig.6 und von Fig.7. Diese Wahrheitstabelle von Fig.8 ist so aufgeteilt, daß danach gefragt ist, ob ein bestimmter T-State beim Übergang zu einem großen Kreis in dem durch diesen Kreis repräsentierten Zustand aktiv ist. Das Kriterium, ob von einem gegebenen Zustand aus ein Übergang zu einem nächsten Zustand, in dem ein bestimmter T-State aktiv ist, möglich ist, wird in Kurzform als NT-State (NEXT T-State) angegeben: NTI, NTVB, NTVE, NT0, NT1, NT2, NT3, NTL, NTW. Dabei tritt beispielsweise als nächster Zustand der T-State TI dann ein, wenn weder T0 noch T1 noch T2 noch T3 im nächsten Zustand aktiv sind. Dies bedeutet mathematisch:

$$NTI = (NT0 \text{ oder } NT1 \text{ oder } NT2 \text{ oder } NT3) - Q.$$

Ein nach oben gerichteter Pfeil bedeutet die logische Verknüpfung "UND". Ein "V" repräsentiert die logische Verknüpfung "ODER". Die Nummern beiden Übergängen in Fig.8 entsprechen den Nummern in den kleinen Kreisen bei den Übergängen in den Fig.6 und 7. Die Bezeichnung für die Nummern der Übergänge in Fig.8 lautet U: M186 für Übergänge im M186 Diagramm und U: M286 für Ubergänge im M286-Modus State Diagramm.

Die jeweiligen Parameter als Übergangsbedingungen sind jeweils in der Spalte BE angegeben. Wie die Fig.8 zu lesen ist, wird beispielsweise anhand der Zeile 20 näher beschrieben: Die Zeile 20 bedeutet, daß der nächste T-State der T-State TVE dann wird, wenn momentan folgende Parameter zutreffen: TVB aktiv und TI aktiv und TL inaktiv und PRIOVLD aktiv. Die zugehörigen Übergänge können in den Diagrammen von Fig.6 und von Fig.7 jeweils unter den Ubergangsnummern 3, 5 beobachtet werden. Diese Übergänge 3, 5 können sodann noch dadurch separiert werden, daß danach gefragt wird, unter welchen Bedingungen BE als nächster T-State der T-State T0 oder alternativ der T-State TI wird.

Sämtliche Eingangsparameter zum T-State Generator TSG (zu diesen Eingangsparametern gehören nicht die Signale CL, PHI1, PHI2), welche in der jeweiligen Zeile von Zeile 01 bis Zeile 48 in Fig.8 in der Spalte BE nicht explizit genannt sind, sind bei dem jeweiligen betreffenden Übergang von einem Zustand zum nächsten Zustand inaktiv.

Bei Kenntnis der Wahrheitstabelle von Fig.8 ist es einfach, einen T-State Generator TSG zu realisieren. Voraussetzung dafür ist ein getaktetes System. Der T-State Generator TSG kann als synchrones Schaltwerk als eine "programmable logic array" (PLA) mit einer regulären Struktur realisiert werden. Dazu benötigt ein Fachmann nur die Kenntnisse aus dem Lehrbuch von C. Mead und L. Conway: "Introduction to VLSI Systems", Addison-Wesley, Kap.3.10 "The programmable logic array" und die Wahrheitstabelle von Fig.8 und die Kenntnis des Blockschaltbildes des T-State Generators TSG von Fig.2, um sogleich das Schaltwerk für den T-State Generator TSG angeben zu können. Die Ausgangssignale des T-State Generators TSG können in einer Flip-Flop-Reihe mit getakteten R, S-Flip-Flops zwischengespeichert werden. Es liegen bereits Generierungssystem vor, die ausgehend von der Zustandstabelle analog zur Fig.8 ein Schaltwerk bis hin zum Layout generieren.(z.B. LOGE, Universität Karlsruhe, Bundesrepublik Deutschland).

In einem Zustand, in dem sich beispielsweise TVE, TL und T0 überlappen, können zwei verschiedene Mikrobefehle in Bearbeitung und ein dritter Mikrobefehl in der Vordecodierung sein: Der erste Mikrobefehl befindet sich in Bearbeitung der Lesephase, der zweite Mikrobefehl befindet sich in Ausführungsphase (z.B. Ausgabe externe Adresse) und der dritte Mikrobefehl befindet sich im Sequenzing, Lesen aus ROM, Vordecodierung.

Erschwerend für die Mikroprogrammsteuerung kommt hinzu, daß nach jeder Befehlsausführung ein Kanalwechsel möglich sein muß. Wegen der hohen Leistungsanforderungen erfolgt eine solche Umschaltung von einem Kanal zum anderen ohne Beeinflussung der Pipeline-Kette (PIP). Das kann z.B. bedeuten, daß für den Kanal 2 ein Befehl aus dem ROM gelesen und vordecodiert wird, daß die Befehlsausführung aber anschließend für einen Befehl von Kanal 1 erfolgt, während gleichzeitig für Kanal 2 noch eine Lesephase bearbeitet wird. Die Ausfürrungsphase (minimale Befehlszeit) dauert 250 ns.

Das Register CR umfaßt kanalspezifische Steuerregister. Das Register PR enthält die Adressen von Datenquelle und Datensenke. Daneben gibt es noch ein Bytecounter-Register, das angibt, wieviele Bytes von einem Datentransfer erfaßt werden. Alle diese Register werden bei einem 'SETUP' des ADMA geladen.

## Patentansprüche

1. Integrierte mikroprogrammierte Vorrichtung zur Steuerung von Informationsverarbeitungsabläufen zur Ermöglichung eines Anschlusses an das BUS-Konzept der Intel Bausteinfamilie iAPX 186 und iAPX 268 mit einer Vorrichtung (TSG) zur Erzeugung der T-States T0 - Start eines BUS-Zyklus -, T1 - erster T-State eines BUS-Zyklus -, T2 - zweiter T-State des M 186-BuS-Zyklus, T3 - dritter T-State des M 186-BUS Zyklus -, TL- Beendigung eines BUS-Zyklus - und TI - Idle-State, zur Steuerung von externen Steuerabläufen der mikroprogrammierten Vorrichtung,
   **dadurch gekennzeichnet,**
   daß die Vorrichtung (TSG) zusätzlich zur Erzeugung von weiteren T-States (TVB, TVE, TW) dient, wobei die weiteren T-States (TVB, TVE, TW) im gleichen Sinne wie bei der Steuerung der externen Steuerabläufe zur Steuerung von internen Steuerablaufen der mikroprogrammierten Vorrichtung dienen und die einzelnen Phasen der mikroprogrammierten Befehlsabarbeitung bestimmen und daß während eines der weiteren T-States (TVB, TVE, TW) mindestens einer der T-States T0, T1, T2, T3, TL, TI erzeugt wird, so daß sich die weiteren T-States (TVB, TVE, TW) mit mindestens einem der T-States T0, T1, T2, T3, TL, TI überlappen, daß die Erzeugung sowohl der T-States T0, T1, T2, T3, TL, TI als auch der weiteren T-States (TVB, TVE, TW) jeweils in Abhängigkeit von vorhergehenden T-States und den Momentanwerten von Zustands- bzw. Modussignalen (PRIOVLD, REQVLD, M186, ORGMKWAIT, RDWR, ISTE, IREADY, BIUSPLIT) erfolgt.

2. Integrierte mikroprogrammierte Vorrichtung nach Anspruch 1, **gekennzeichnet durch** Mittel (MPIR,MLATCH) zur Selektion eines Mikrobefehls und zur Zwischenspeicherung dieses Mikrobefehls.

3. Integrierte mikroprogrammierte Vorrichtung nach Anspruch 1 oder 2, **gekennzeichnet durch** Mittel (ADD1) zum Zwischenspeichern einer externen Adresse.

4. Integrierte mikroprogrammierte Vorrichtung nach einem der Ansprüche 1 bis 3, **gekennzeichnet durch** Mittel (SQ,SLATCH) zur Bereitstellung einer Mikrobefehl-Folgeadresse zur aktuellen Mikrobefehlsadresse.

5. Integrierte mikroprogrammierte Vorrichtung nach einem der Ansprüche 1 bis 4 **gekennzeichnet durch** Mittel (ROM,MLATCH) zur Bereitstellung des Folgemikrobefehls.

6. Integrierte mikroprogrammierte Vorrichtung nach einem der Ansprüche 1 bis 5, **gekennzeichnet durch** Mittel (MPAR) zur Speicherung der zu einem aktuellen Mikrobefehl gehörenden Mikrobefehlsadresse.

7. Integrierte mikroprogrammierte Vorrichtung nach einem der Ansprüche 1 bis 6, **gekennzeichnet durch** Mittel (ADD1,ADD2,OF,DO,OC,MUX2,ADD) zur Erzeugung einer neuen externen Adresse.

8. Integrierte mikroprogrammierte Vorrichtung nach einem der Ansprüche 1 bis 7, **gekennzeichnet durch** Mittel (BIU) zur Umwandlung eines Wortzugriffswunsches des Mikroprogrammes in einen tatsächlichen Bytezugriffswunsch.

9. Integrierte mikroprogrammierte Vorrichtung nach einem der Ansprüche 1 bis 8, **gekennzeichnet durch** Mittel (PRIO) zur Priorisierung eines von mehreren Kanälen für Informationstransfer.

10. Integrierte mikroprogrammierte Vorrichtung nach einem der Ansprüche 1 bis 9, **gekennzeichnet durch** Mittel (M186) zum Umschalten zwischen BUS Timing-Modi (M186, M286).

11. Verfahren zum Betrieb einer integrierten mikroprogrammierten Vorrichtung mit allen Merkmalen gemäß einem der vorhergehenden Ansprüche, wobei die mikroprogrammierte Vorrichtung mehrere steuerbare Kanäle und ein Mikroprogramm-Latch (MLATCH) enthält, wobei jedem Kanal ein Mikroprogramminstruktionsregister (MPIR) zugeordnet ist, in dem jeweils ein Mikrobefehl gespeichert ist, und wobei während eines ersten T-State-Zustandes TVB - T-State Vorbereitung Beginn - der weiteren T-State-Zustände das Mikroprogramm-Instruktionsregister (MPIR) des priorisierten Kanals selektiert wird und der dort gespeicherte Mikrobefehl in ein Mikroprogramm-Latch (MLATCH) transferiert wird.

12. Verfahren zum Betrieb einer integrierten mikroprogrammierten Vorrichtung nach Anspruch 11, **dadurch gekennzeichnet**, daß während eines T-State-Zustands (TVB) eine Pointer-Adresse aus einem internen Pointerregistersatz (PR) gelesen, in einen Zwischenspeicher (ADD1) gespeichert und zu einem Adreß-Puffer transferiert wird.

13. Verfahren zum Betrieb einer integrierten mikroprogrammierten Vorrichtung nach einem der Ansprüche 11 oder 12, dadurch **gekennzeichnet,** daß während eines T-State-Zustands (TVB) eine Folgeadresse der aktuellen Mikroadresse bezogen auf den gleichen Kanal bereitgestellt wird und daß diese Folgeadresse in einer internen Mikroadreß-Zwischenspeicher (SLATCH) übernommen wird.

14. Verfahren zum Betrieb einer integrierten mikroprogrammierten Vorrichtung nach einem der Ansprüche 11 bis 13, dadurch **gekennzeichnet**, daß während eines T-State-Zustands (TVE) der Folgemikrobefehl, bezogen auf einen gerade bearbeiteten Kanal, bereitgestellt wird, daß dieser Folgemikrobefehl in das kanalspezifische Mikrobefehlsregister (MPIR) eingeschrieben wird und daß die zugehörige Folgemikroprogrammadresse in das kanalspezifische Mikroprogramm-Adreßregister (MPAR) übernommen wird.

15. Verfahren zum Betrieb einer integrierten mikroprogrammierten Vorrichtung nach einem der Ansprüche 11 bis 14, dadurch **gekennzeichnet**, daß während eines T-State-Zustands (TVE) eine Adreßpointeraddition gesteuert wird, und daß die so gewonnene neue externe Adresse (EA) in das Pointerregister (FR) zurückgeschrieben wird.

16. Verfahren zum Betrieb einer integrierten mikroprogrammierten Vorrichtung nach einem der Ansprüche 11 bis 15, dadurch **gekennzeichnet**, daß während eines T-State-Zustands (TW) ein Wortzugriffswunsch des Mikroprogrammes in einen tatsächlichen Bytezugriffswunsch umgewandelt wird, und daß der zweite und die eventuell folgenden zugehörigen Bytezugriffe selbständig, ohne Anforderung eines neuen Mikrobefehls, gesteuert werden.

17. Verfahren zum Betrieb einer integrierten mikröprogrammierten Vorrichtung nach einem der Ansprüche 11 bis 16, dadurch **gekennzeichnet**, daß die T-State-Zustände sinnvoll aneinandergekettet und geeignet überlappt werden.

18. Verfahren zum Betrieb einer integrierten mikroprogrammierten Vorrichtung nach Anspruch 17, dadurch **gekennzeichnet,** daß mindestens zwei Mikrobefehle gleichzeitig gehandhabt werden.

19. Verfahren zum Betrieb einer integrierten mikroprogrammierten Vorrichtung nach Anspruch 18, dadurch **gekennzeichnet**, daß gleichzeitig ein erster Mikrobefehl in Bearbeitung der Lesephase (T0) ist, daß ein zweiter Mikrobefehl in Ausführungsphase (TL) ist, und daß ein dritter Mikrobefehl in Vorbereitungsphase (TVE) gehandhabt wird.

**20.** Verfahren zum Betrieb einer integrierten mikroprogrammierten Vorrichtung nach Anspruch 18, **dadurch gekennzeichnet**, daß gleichzeitig ein erster Mikrobefehl in Bearbeitung der Lesephase (T0) ist und daß ein zweiter Mikrobefehl in Ausführungsphase (TL) gehandhabt wird.

**21.** Verfahren zum Betrieb einer integrierten mikroprogremmierten Vorrichtung nach Anspruch 18, dadurch **gekennzeichnet**, daß gleichzeitig ein erster Mikrobefehl in Ausführungsphase (TL) ist, daß ein zweiter Mikrobefehl in Vorbereitungsphase (TVB, TVE) gehandhabt wird, und daß zugleich die integrierte mikroprogrammierte Vorrichtung einen "idle-State" (TI) einnimmt.

## Claims

**1.** Integrated microprogrammed device for controlling information processing operations to permit a connection to the BUS concept of the Intel iAPX 186 and iAPX 268 module family, having a device (TSG) for generating T-states T0 - start of a BUS cycle, T1 - first T-state of a BUS cycle, T2 - second T-state of the M186 BUS cycle, T3 - third T-state of the M186 BUS cycle, TL - end of a BUS cycle, and TI - idle state, for controlling external control operations of the microprogrammed device, characterized in that the device (TSG) additionally serves to generate further T-states (TVB, TVE, TW), the further T-states (TVB, TVE, TW) serving, in the same way as with the control of the external control operations, to control internal control operations of the microprogrammed device and to define the individual phases of the microprogrammed instruction execution, and in that during one of the further T-states (TVB, TVE, TW) at least one of the T-states T0, T1, T2, T3, TL, TI is generated so that the further T-states (TVB, TVE, TW) overlap at least one of the T-states T0, T1, T2, T3, TL, TI, in that the generation both of the T-states T0, T1, T2, T3, TL, TI and of the further T-states (TVB, TVE, TW) is performed in each case depending on preceding T-states and the instantaneous values of status or mode signals (PRIOVLD, REQVLD, M186, ORGMKWAIT, RDWR, ISTE, IREADY, BIUSPLIT).

**2.** Integrated microprogrammed device according to Claim 1, characterized by means (MPIR, MLATCH) for selecting a microinstruction and for temporarily storing said microinstruction.

**3.** Integrated microprogrammed device according to Claim 1 or 2, characterized by means (ADD1) for temporarily storing an external address.

**4.** Integrated microprogrammed device according to one of Claims 1 to 3, characterized by means (SQ, SLATCH) for providing a microinstruction link address for the current microinstruction address.

**5.** Integrated microprogrammed device according to one of Claims 1 to 4, characterized by means (ROM, MLATCH) for providing the successor microinstruction.

**6.** Integrated microprogrammed device according to one of Claims 1 to 5, characterized by means (MPAR) for storing the microinstruction address belonging to a current microinstruction.

**7.** Integrated microprogrammed device according to one of Claims 1 to 6, characterized by means (ADD1, ADD2, OF, DO, OC, MUX2, ADD) for generating a new external address.

**8.** Integrated microprogrammed device according to one of Claims 1 to 7, characterized by means (BIU) for converting a word access request of the microprogram into an actual byte access request.

**9.** Integrated microprogrammed device according to one of Claims 1 to 8, characterized by means (PRIO) for prioritizing one of several channels for information transfer.

**10.** Integrated microprogrammed device according to one of Claims 1 to 9, characterized by means (M186) for switching over between BUS timing modes (M186, M286).

**11.** Method for operating an integrated microprogrammed device having all the features according to one of the preceding claims, in which the microprogrammed device contains a plurality of controllable channels and a microprogram latch (MLATCH), each channel being assigned a microprogram instruction register (MPIR) in which one microinstruction is stored in each case, and in which, during a first T-state TVB - T-state preparation begin - of the further T-states, the microprogram instruction register (MPIR) of the pri-

9

oritized channel is selected, and the microinstruction stored there is transferred into a microprogram latch (MLATCH).

**12.** Method for operating an integrated microprogrammed device according to Claim 11, characterized in that, during a T-state (TVB), a pointer address is read out of an internal pointer register set (PR), stored in an intermediate memory (ADD1) and transferred to an address buffer.

**13.** Method for operating an integrated microprogrammed device according to one of Claims 11 or 12, characterized in that a link address of the current microaddress relative to the same channel is provided during a T-state (TVB), and in that said link address is transferred into an internal microaddress intermediate memory (SLATCH).

**14.** Method for operating an integrated microprogrammed device according to one of Claims 11 to 13, characterized in that the successor microinstruction, relative to a channel just processed, is provided during a T-state (TVE), in that said successor microinstruction is written into the channel-specific microinstruction register (MPIR), and in that the associated microprogram link address is transferred into the channel-specific microprogram address register (MPAR).

**15.** Method for operating an integrated microprogrammed device according to one of Claims 11 to 14, characterized in that an address pointer addition is triggered during a T-state (TVE), and in that the new external address (EA) obtained in this way is written back into the pointer register (PR).

**16.** Method for operating an integrated microprogrammed device according to one of Claims 11 to 15, characterized in that a word access request of the microprogram is converted into an actual byte access request during a T-state (TW), and in that the second and any following associated byte accesses are controlled independently, without requesting a new microinstruction.

**17.** Method for operating an integrated microprogrammed device according to one of Claims 11 to 16, characterized in that the T-states are logically concatenated and suitably overlapped.

**18.** Method for operating an integrated microprogrammed device according to Claim 17, characterized in that at least two microinstructions are handled simultaneously.

**19.** Method for operating an integrated microprogrammed device according to Claim 18, characterized in that at the same time a first microinstruction is processing the read phase (T0), in that a second microinstruction is in the execution phase (TL), and in that a third microinstruction is handled in the preparation phase (TVE).

**20.** Method for operating an integrated microprogrammed device according to Claim 18, characterized in that at the same time a first microinstruction is processing the read phase (T0), and in that a second microinstruction is handled in the execution phase (TL).

**21.** Method for operating an integrated microprogrammed device according to Claim 18, characterized in that at the same time a first microinstruction is in the execution phase (TL), in that a second microinstruction is handled in the preparation phase (TVB, TVE), and in that at the same time the integrated microprogrammed device assumes an "idle state" (TI).

**Revendications**

**1.** Dispositif microprogrammé intégré pour la commande de cycles de traitement d'informations destinés à permettre un rattachement au concept (BUS) de la famille de composants Intel iAPX 186 et iAPX 268, comprenant un dispositif (TSG) servant à produire les états T-State T T0 - démarrage d'un cycle de BUS -, T1 (premier état T-State T d'un cycle de BUS), T2 - second état T-State T du cycle du M 186 - BUS, T3 - troisième état T-State T du cycle M 186 - BUS -, TL - fin d'un cycle de BUS - et TI Idle-State, pour la commande de cycles externes de commande du dispositif microprogrammé, caractérisé par le fait que le dispositif (TSG) sert en outre à produire d'autres états T-State T (TVB, TVE, TW), les autres états T-State T (TVB, TVE, TW) servant dans le même sens que lors de la commande des cycles externes de commande, pour la commande de cycles internes de commande du dispositif microprogrammé et déterminant les différentes phases du traitement microprogrammé d'instructions, et que pendant l'un des autres états T-State T (TVB, TVE, TW), au moins l'un des états T-State T0, T1, T2, r3, TL, TI est produit de sorte que les autres états T-State T (TVB, TVE, TW) sont en chevauchement avec au moins l'un des états T-State T T0, T1, T2, T3, TL, TI, que la production aussi bien des états T-State T T0, T1, T2, T3, TL, TI que des autres états T-State T (TVB, TVE, TW) s'effectue respectivement en fonction d'états T-State T précédents et des valeurs instantanées de signaux d'état ou de signaux de mode (PRIOVLD, REQVLD, M186, ORGWKWAIT, RDWR, ISTE, IREADY, BIUSPLIT).

2. Dispositif microprogrammé intégré suivant la revendication 1, caractérisé par des moyens (MPIR, MLATCH) pour sélectionner une micro-instruction et mémoriser temporairement cette micro-instruction.

3. Dispositif microprogrammé intégré suivant la revendication 1 ou 2, caractérisé par des moyens (ADD1) pour la mémorisation intermédiaire d'une adresse extérieure.

4. Dispositif microprogrammé intégré suivant l'une des revendications 1 à 3, caractérisé par des moyens (SQ, SLATCH) pour préparer une adresse suivante de micro-instruction pour l'adresse actuelle de micro-instruction.

5. Dispositif microprogrammé intégré suivant l'une des revendications 1 à 4, caractérisé par des moyens (ROM, MLATCH) pour préparer la micro-instruction suivante.

6. Dispositif microprogrammé intégré suivant l'une des revendications 1 à 5, caractérisé par des moyens (MPAR) pour mémoriser l'adresse de micro-instruction qui fait partie d'une micro-instruction actuelle.

7. Dispositif microprogrammé intégré suivant l'une des revendications 1 à 6, caractérisé par des moyens (ADD1, ADD2, OF, DO, OC, MUX2, ADD) pour produire une nouvelle adresse externe.

8. Dispositif microprogrammé intégré suivant l'une des revendications 1 à 7, caractérisé par des moyens (BIU) pour convertir un désir d'accès de mot du microprogramme lors d'un souhait effectif d'accès d'octets.

9. Dispositif microprogrammé intégré suivant l'une des revendications 1 à 8, caractérisé par des moyens (PRIO) pour donner la priorité à l'un de plusieurs canaux pour transfert d'informations.

10. Dispositif microprogrammé intégré suivant l'une des revendications 1 à 9, caractérisé par des moyens (M186) pour réaliser une commutation entre les modes de cadencement de BUS (M186, M286).

11. Procédé pour faire fonctionner un dispositif microprogrammé intégré présentant toutes les caractéristiques selon l'une des revendications précédentes, dans lequel le dispositif microprogrammé contient plusieurs canaux commandables et un circuit de verrouillage de microprogramme (MLATCH), et dans lequel à chaque canal est associé un registre (MPIR) d'instructions de microprogramme, dans lequel respectivement une instruction est mémorisée, et dans lequel, pendant un premier état T-State T-State TVB - T-State début de la préparation - parmi les autres états T-State, le registre (MPI) d'instructions de microprogramme du canal, auquel la priorité est donnée, est sélectionné et la micro-instruction mémorisée dans ce registre est transférée dans un circuit de verrouillage de microprogramme (MLATCH).

12. Procédé pour faire fonctionner un dispositif microprogrammé suivant la revendication 11, caractérisé par le fait que pendant un état T-State (TVB), une adresse de pointeur est lue à partir d'un jeu interne de registres de pointeurs (PR), et est mémorisée dans une mémoire intermédiaire (ADD1) et est transférée à un tampon d'adresses.

13. Procédé pour faire fonctionner un dispositif microprogrammé suivant l'une revendications 11 ou 12, caractérisé par le fait que pendant un état T-State (TVB), une adresse succédant à la micro-adresse actuelle et en rapport avec le même canal est préparée et cette adresse suivante est transférée dans une mémoire intermédiaire interne de micro-adresses (SLATCH).

14. Procédé pour faire fonctionner un dispositif microprogrammé suivant l'une des revendications 11 à 13, caractérisé par le fait que pendant un état T-State (TVE), la micro-instruction suivante, rapportée à un canal précisément traité, est préparée, que cette micro-instruction suivante est enregistrée dans le registre de micro-instructions (MPIR), qui est spécifique au canal, et que l'adresse de microprogramme suivante associée est tranférée dans le registre d'adresses de microprogrammes (MPAR) spécifique au canal.

15. Procédé pour faire fonctionner un dispositif microprogrammé suivant l'une des revendications 11 à 14, caractérisé par le fait que pendant un état T-State (TVE), une addition de pointeurs d'adresses est commandée, et que la nouvelle adresse externe (EA) ainsi obtenue est enregistrée en retour dans le registre de pointeurs (PR).

16. Procédé pour faire fonctionner un dispositif microprogrammé suivant l'une des revendications 11 à 15, caractérisé par le fait que pendant un état T-State (TW), un souhait d'accès de mot du microprogramme est convertit en un souhait effectif d'accès d'octet et que le second accès d'octets et les accès d'octets associés éventuellement suivants sont commandés automatiquement, sans demande d'une nouvelle micro-instruction.

17. Procédé pour faire fonctionner un dispositif microprogrammé suivant l'une des revendications 11 à 16, caractérisé par le fait que les états T-State sont chaînés entre eux de façon judicieuse et sont mis en chevauchement de façon appropriée.

18. Procédé pour faire fonctionner un dispositif microprogrammé suivant la revendication 17, caractérisé par le fait qu'au moins deux micro-instructions sont manipulées simultanément.

19. Procédé pour faire fonctionner un dispositif microprogrammé suivant la revendication 18, caractérisé par le fait que simultanément une première micro-instruction est en traitement dans la phase de lecture (TO), qu'une seconde micro-instruction est dans la phase d'exécution (TL) et qu'une troisième instruction est manipulée dans la phase de prétraitement (TVE).

20. Procédé pour faire fonctionner un dispositif microprogrammé suivant la revendication 18, caractérisé par le fait que simultanément une première micro-instruction est en cours de traitement dans la phase de lecture (TO) et qu'une seconde instruction est manipulée dans la phase d'exécution (TL).

21. Procédé pour faire fonctionner un dispositif microprogrammé suivant la revendication 18, caractérisé par le fait que simultanément une première micro-instruction est dans la phase d'exécution (TL), qu'une seconde micro-instruction est manipulée dans la phase de prétraitement (TVB, TVE) et que simultanément le dispositif microprogrammé intégré prend un état "Idle-State" (TI).

# FIG1

# FIG 2

# FIG 3

EP 0 108 415 B1

FIG 4

# FIG 5

M186: | T0 | T1 | T2 | T3 | TL
T0 | T1 | T2 | T3 | TL
T0 |

←————————— B1 ——————————→←———————— B2 ————————→

⊢————→ t

M286: T0 | T1 | TL
T0 | T1 | TL
T0 | T1 | TL |

←— B1 —→←— B2 —→←— B3 —→

⊢————→ t

FIG 6

EP 0 108 415 B1

FIG 7

# FIG 8

T-STATE:  NTI

( NT0 V NT1 V NT2 V NT3 ) -Q

| | T-STATE:  NTYB | BE | U:M 186 | U:M 286 |
|---|---|---|---|---|
| 01 | TVE ↑ TI ↑ TL-Q | | 4 | 4 |
| 02 | T2 ↑ TW-Q | | 8 | - |
| 03 | TVB ↑ T3 ↑ | PRIOVLD-Q | 11,27 | - |
| 04 | TVB ↑ T3 ↑ | ORGMKWAIT | 11,27 | - |
| 05 | TVE ↑ T0 ↑ | M186 ↑ ISTE-Q | 25,20 | - |
| 06 | TVB ↑ TI ↑ | PRIOVLD-Q | 25,21 | 13,15,16 |
| 07 | TVB ↑ TL ↑ | M186 ↑ ORGMKWAIT | 21 | - |
| 08 | TVE ↑ TL ↑ TI ↑ | M186 | 24 | - |
| 09 | TVB ↑ T3 ↑ | IREADY-Q | 27 | - |
| 10 | TVE ↑ T0 ↑ | M186-Q ↑ BIUSPLIT-Q ↑ ISTE | - | 6,9 |
| 11 | TVE ↑ TI ↑ | IREADY | - | 12 |
| 12 | TVB ↑ T1 ↑ | PRIOVLD-Q | - | 14 |
| 13 | TVB ↑ T1 ↑ | ORGMKWAIT | - | 14 |
| 14 | TVB ↑ TL ↑ | M186-Q ↑ ROWR ↑ ORGMKWAIT | - | 15,16 |
| 15 | TVB ↑ TL ↑ | M186-Q ↑ IREADY ↑ ORGMKWAIT | - | 16 |
| 16 | TVE ↑ TL ↑ T0 ↑ | IREADY ↑ ISTE-Q | - | 19 |
| 17 | TW ↑ T0 ↑ | M186-Q ↑ ISTE | - | 23 |
| 18 | TVE ↑ T0 ↑ | M186-Q ↑ REQVLD-Q ↑ ISTE-Q | - | 27,19,24 |
| 19 | TVE ↑ T0 ↑ TL-Q ↑ | M186-Q ↑ ISTE-Q | - | 27 |
| | T-STATE:  NTVE | BE | | |
| 20 | TVB ↑ TI ↑ TL-Q ↑ | PRIOVLD | 3,5 | 3,5 |
| 21 | TVB ↑ T3 ↑ | IREADY ↑ PRIOVLD ↑ ORGMKWAIT-Q | 9,10 | - |

EP 0 108 415 B1

# FIG 8

| | | | |
|---|---|---|---|
| 22 TVB ↑ T3 ↑ | IREADY ↑ RDWR-Q ↑ PRIOVLD | 10 | - |
| 23 TVB ↑ TI ↑ | PRIOVLD ↑ ORGMKWAIT-Q | 22,23,3,5 | 5,17,18,25,28,3 |
| 24 TVB ↑ TI ↑↑ | PRIOVLD ↑ RDWR-Q | 3,23 | 17,28,3 |
| 25 TVB ↑ T1 ↑ | PRIOVLD ↑ ORGMKWAIT-Q | - | 7,10 |
| 26 TVE ↑ TL ↑ TO ↑ M186-Q ↑ | ISTE-Q ↑ REQVLD | - | 8 |
| 27 TVB ↑ T1 ↑ | RDWR-Q ↑ PRIOVLD | - | 10 |
| 28 TVE ↑ TL ↑ TI ↑ M186-Q ↑ | IREADY-Q | - | 11 |
| T-STATE: NT0 | BE | | |
| 29 TVB ↑ TI ↑ TL-Q ↑ | RDWR ↑ PRIOVLD | 5 | 5 |
| 30 TVB ↑ T3 ↑ | IREADY ↑ PRIOVLD ↑ RDWR ↑ ORGMKWAIT-Q | 9 | - |
| 31 TW ↑ T3 ↑ | IREADY | 17 | - |
| 32 TVB ↑ TI ↑ | RDWR ↑ PRIOVLD ↑ ORGMKWAIT-Q | 22,5 | 5,18,25 |
| 33 TVB ↑ T1 ↑ | RDWR ↑ PRIOVLD ↑ ORGMKWAIT-Q | - | 7 |
| 26 TVE ↑ TL ↑ TO ↑ M186-Q ↑ | ISTE-Q ↑ REQVLD | - | 8 |
| 34 TW ↑ T1 ↑ M186-Q | | - | 21 |
| 35 TW ↑ TO ↑ M186-Q ↑ | ISTE-Q | - | 22 |
| T-STATE: NT1 | BE | | |
| 36 TO ↑ | ISTE | 6,14,12,13,18 | 6,9,20,23,26 |
| T-STATE: NT2 | BE | | |
| 37 T1 ↑ | M186 | 7,15 | - |
| T-STATE: NT3 | BE | | |
| 38 T2 | | 8,16 | - |

EP 0 108 415 B1

# FIG 8

| | | | |
|---|---|---|---|
| 37 T3 ↑ | IREADY-Q | 27,19 | - |
| **T-STATE: NT1** | **BE** | | |
| 40 T3 ↑ | IREADY | 9,10,11,17 | - |
| 41 T1 ↑ | M186-Q | - | 7,10,14,21 |
| 28 TVE ↑ TL ↑ TI ↑ | M186-Q ↑ IREADY-Q | - | 11 |
| 42 TVB ↑ TL ↑ | M186-Q ↑ IREADY-Q | - | 15,25,28 |
| 36 TW ↑ TO ↑ | M186-Q ↑ ISTE-Q | - | 22 |
| 43 TVE ↑ TL ↑ TO ↑ | M186-Q ↑ IREADY-Q ↑ ISTE-Q | - | 24,8 |
| **T-STATE: NTW** | **BE** | | |
| 44 TVE ↑ TO ↑ | BIUSPLIT ↑ ISTE | 14,13 | 20,26 |
| 45 TW ↑ T1 | | 15 | 21 |
| 46 TW ↑ T2 | | 16 | - |
| 47 TW ↑ T3 | | 17,19 | - |
| 48 TW ↑ TO ↑ | M186-Q ↑ ISTE-Q | - | 22 |

EP 0 108 415 B1